**Europäisches Patentamt**

**European Patent Office**

**Office européen des brevets**

(11) Publication number: **0 214 670**
**B1**

(12) **EUROPEAN PATENT SPECIFICATION**

(45) Date of publication of patent specification: **07.02.90**

(21) Application number: **86112648.0**

(22) Date of filing: **12.09.86**

(51) Int. Cl.⁵: **F 16 L 55/12**

(54) **Method of fastening baffles inside a tube and a closing system provided by such method.**

(30) Priority: **13.09.85 US 776026**

(43) Date of publication of application:
**18.03.87 Bulletin 87/12**

(45) Publication of the grant of the patent:
**07.02.90 Bulletin 90/06**

(84) Designated Contracting States:
**AT BE CH DE FR GB IT LI NL SE**

(56) References cited:
**GB-A-1 207 790**

(73) Proprietor: **NORSK HYDRO A/S**
**Bygdoy Allé 2**
**N-0257 Oslo 2 (NO)**

(72) Inventor: **Clausen, Edvin List**
**Kogsvn. 10**
**DK-6270 Tonder (DK)**

(74) Representative: **WILHELMS, KILIAN & PARTNER**
**Patentanwälte**
**Eduard-Schmid-Strasse 2**
**D-8000 München 90 (DE)**

Courier Press, Leamington Spa, England.

## Description

The present invention relates to a method of fastening of baffles inside a tubular member as it is stated in the preamble of the patent claim 1. Such a method is known from the GB—A—1 207 790.

The present invention also relates to a closing system provided by such a method as it is stated in the preamble of the patent claim 3. Such a system is also known from the GB—A—1 207 790.

Different heat exchangers applied in modern motor vehicles, e.g. condensers, comprising manifold tube(s) with a plurality of U-shaped tube bends constituting a circulation path for a heat exchanging fluid, are provided with closing and partition walls within the tube. These walls (baffles) are installed in order to block or divert the flow of liquid/gas through the tube. Currently, such baffles are provided by a brazing or soldering operation requiring use of heat and representing introduction of foreign materials (solder, flux) into the tube. Close temperature control is necessary, especially in the case of brazing, in order to avoid an overheating and consequently collapse of the tube. Furthermore, the introduction of foreign material (fluxes) will often promote corrosion attack on the tube.

Attempts have also been made to introduce mechanical methods for fastening of baffles, which rely on application of pressure forces to the outer surface of the tube, collapsing the tube wall against a plug inserted into the tube. A leakage proof connection between the tube wall and the plug requires an uniformly applied deformation force to the whole outer surface of the tube which is difficult to achieve in practice because of limited access to the tube surface and/or shape of the tube members.

Also with the known method according to the GB—A—1 207 790 for providing a tight closure at the location where the plug is expanded within the tubular member it is suggested to weld the plug to the tubular member.

It is therefore the object of the present invention to provide a method of fastening baffles inside tubular members of the type mentioned in the preamble of the patent claim 1 with which the baffles are fastened merely by mechanical operations without soldering, brazing or welding operations being necessary.

This object is obtained by the features mentioned in the characterizing part of the patent claim 1.

By the method according to the present invention the baffles are fastened inside the tubular member based upon a pure mechanical deformation of the tubular member's wall ensuring a leakproof closure of the tubular member.

According to the present invention tubular members regardless of their shape or the location of the tubular member in heat exchanger units and even in case access to the tubular member void is restricted only to one end can be closed by fastening baffles inside the tubular members.

It is contemplated that the expression tubular member means any hollow shape suitable for the intended purpose. For example the tubular member may comprise a hollow shape of circular, elliptical (oval) or rectangular cross section with single or multiple cavity (voids).

To a preferred embodiment of the invention the patent claim 2 is directed.

The closing system according to the present invention is characterized by the features mentioned in the characterizing part of claim 3.

Preferred embodiments of the closing system according to the present invention are subject matter of the patent claims 4 and 5.

Figure 1 shows schematically a sectional view of the closing baffle inside a tubular member,

Figures 2—4 illustrate schematically individual steps in the method of in situ forming of baffles, and

Figure 5 shows schematically a sectional view of a variant of the closing system comprising an outside support ring on the tubular member.

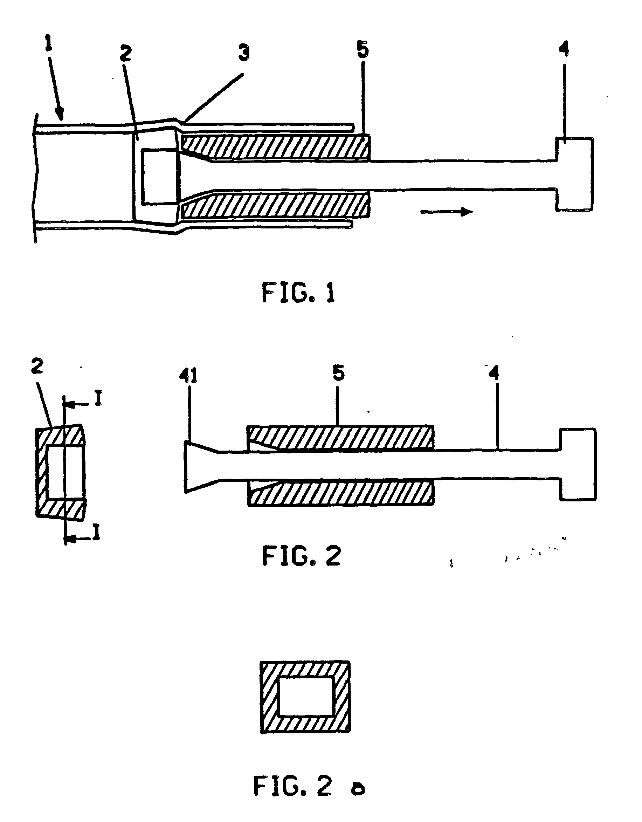

Figure 1 shows schematically in a cross-section a tubular member (1) as a single tube, e.g. thin-walled Al-tubing, provided with a closing baffle (2) firmly interlocked in an indentation (3) running circumferentially in the tube wall. An expansion mandrel (4) carrying a support die (5) can be seen under its withdrawal from the tube after accomplished expansion of the baffle (2) and plastic deformation of the tube wall resulting in formation of the identation (3).

Referring to Figures 2—4, illustrating schematically the individual steps in the process of preforming, inserting and fastening of the baffle inside the tube, the baffle is shown in Figure 2 as a cup-shaped plug (2) with outwardly diverging walls (22) having a cross-section complementary-shaped to the inner cross-section of the actual tubular member. The cross-section can be circular, oval or as shown in Figure.2a rectangular. Figure 2a is a sectional view'taken on line I—I of Figure 2.

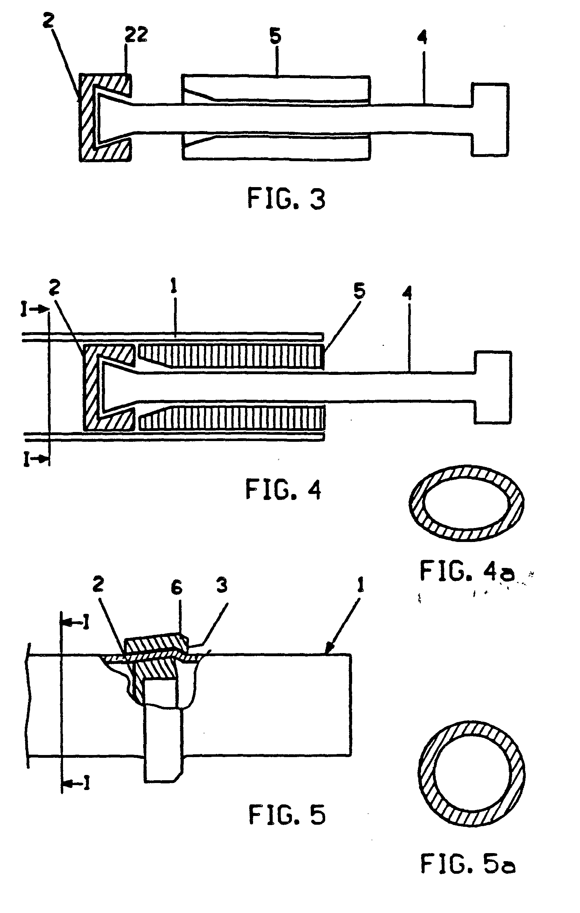

An expansion mandrel (4) is provided with a head part (41) designed and dimensioned so that the plug (2) can receive this head part and by pressing into a suitable die (not shown in the picture) achieve a full encapsulation of the mandrel head by collapsed (crimped) plug wall (22)—see Figure 3.

A locating or support die (5) is attached to the mandrel (4) in order to insert the whole assembled system with the plug (2) into the tube void and positioned at the desired location within the tube. It is apparent from Figure 4 that the suitable design of the support die allows it also to be used as a locating or positioning device for the plug by adapting its length and/or positioning with regard to the open (accessible) end of the tube. The support die is then firmly held in the place, and the expansion mandrel (4) is withdrawn from the plug causing the plug walls (22) to expand uniformly against the inner surface of the tube. The tube wall around the expanding plug (4) is subjected to a local plastic deformation resulting in formation of a circumferential indentation (3) as shown in Figure 1. Figure 4a is a sectional view of the tube taken on line I—I of Figure 4 and shows an elliptical cross-section of the tube.

The required forces holding the plug in position can be adjusted by proper dimensional control of the plug and/or the expansion mandrel. Furthermore, in Figure 5 it is shown an embodiment of the closing system according to the present invention where optionally an outside support ring (6) is located on the tube over the plug (2) prior to the expansion step. By proper dimensioning and choice of material in the ring, e.g. hardened aluminum, an additional increase of the fastening forces can be achieved. Figure 5a is a sectional view taken on line I—I of Figure 5, showing in this case a circular (round) cross-section of the tube.

The advantages offered by the above described closing system are obvious. Leakage proof contact between the baffles and tubular member wall is achieved merely by mechanical operations also no soldering/brazing or additional gluing as presently required by the known fastening methods. The baffle (plug) can be inserted and expanded into a firm engagement with the tubular member by entering the tubular member from one side only. Furthermore, the special design of the plug and its positioning in the tubular member, as a cup-shaped plug having walls diverging in direction of the medium flow or pressure in the tube, will ensure that with increased working pressure in the tube a tighter sealing between the tube wall and the baffle will be achieved.

## Claims

1. A method of fastening of baffles inside a tubular member, comprising steps of providing an expanding member in form of a cup-shaped plug (2) having diverging walls (22) and a cross-section essentially complementary-shaped to the tubing's cross-section, attaching the said plug to a mandrel (4) by crimping of the diverging walls around a head part (41) of the mandrel (4), inserting of the assembled mandrel (4) with the plug (2) into the tubular member void and expanding of the plug into a firm engagement with the tubular member on a desired location predetermined by the position or length of a support die (5) attached to the mandrel, by withdrawal of the mandrel from the plug (2), characterized in that by expanding of the plug the wall of the tubular member is plastically deformed thereby forming a circumferential indentation (3) in the wall.

2. A method according to claim 1, characterized in that the tubular member is an aluminum tube and an outside support ring (6) is located on the tube over the inserted plug (2) prior to the expansion step.

3. A closing system for a tubular member (1) comprising an expanded member (2) having a cross-section essentially complementary-shaped to the inner cross-section of the tubular member and extending circumferentially into the tubular member's wall, characterized in that the expanded member (2) is placed in an indentation (3) of the wall of the tubular member caused by a plastic deformation of the wall.

4. A closing system according to claim 1, characterized in that the expanded member (2) is a cup-shaped plug having outer walls (22) diverging in the direction of the prevailing flow and/or pressure in the tubular member.

5. A closing system according to claim 4, characterized in that the tubular member (1) is an aluminum tube provided with an outside support ring (6) surrounding the identation (3) of the tube.

## Patentansprüche

1. Verfahren zum Befestigen von Trennwänden im Innern eines rohrförmigen Elementes, welches die Schritte umfaßt, daß ein Dehnungselement in Form eines becherförmigen Stopfens (2) mit divergierenden Wänden (22) und einem Querschnitt vorgesehen wird, der im wesentlichen dem Querschnitt des rohrförmigen Elementes komplementär geformt ist, daß der Stopfen an einem Dorn (4) angebracht wird, indem die divergierenden Wände um den Kopfteil (41) des Dorns (4) gepreßt werden, daß der Dorn (4) mit dem daran angeordneten Stopfen (2) in den Hohlraum des rohrförmigen Elementes eingeführt wird und daß der Stopfen in eine feste Ineingriffnahme mit dem rohrförmigen Element an einer gewünschten Stelle gedehnt wird, die durch die Lage oder die Länge eines Haltewerkzeuges (5) bestimmt ist, das am Dorn angebracht ist, indem der Dorn vom Stopfen (2) abgezogen wird, dadurch gekennzeichnet, daß durch das Dehnen des Stopfens die Wand des rohrförmigen Elementes plastisch verformt wird, so daß dadurch ein in Umfangsrichtung verlaufender Eindruck (3) in der Wand gebildet wird.

2. Verfahren nach Anspruch 1, dadurch gekennzeichnet, daß das rohrförmige Element ein Aluminiumrohr ist und daß ein äußerer Haltering (6) auf dem Rohr über dem eingesetzten Stopfen (2) vor dem Dehnen angeordnet wird.

3. Schließanordnung für ein rohrförmiges Element (1) mit einem gedehnten Element (2), das einen Querschnitt hat, der im wesentlichen komplementär zum inneren Querschnitt des rohrförmigen Elementes geformt ist, und das sich in Umfangsrichtung in die Wand des rohrförmigen Elementes erstreckt, dadurch gekennzeichnet, daß das gedehnte Element (2) in einer Vertiefung (3) der Wand des rohrförmigen Elementes angeordnet ist, die durch eine plastische Verformung der Wand hervorgerufen ist.

4. Schließanordnung nach Anspruch 1, dadurch gekennzeichnet, daß das gedehnte Element (2) ein becherförmiger Stopfen ist, dessen Außenwände (22) in die Richtung des herrschenden Stromes und/oder Druckes im rohrförmigen Element divergent verlaufen.

5. Schließanordnung nach Anspruch 4, dadurch gekennzeichnet, daß das rohrförmige Element (1) ein Aluminiumrohr ist, das mit einem äußeren Haltering (6) versehen ist, der die Vertiefung (3) des Rohres umgibt.

**Revendications**

1. Procédé de fixation de chicane à l'intérieur d'un organe tubulaire, comprenant les étapes consistant à réaliser un organe d'expansion sous forme d'un tampon (2) ayant la forme d'une coupelle, possédant des parois divergentes (22) et une section transversale ayant une forme à peu près complémentaire à la section transversale intérieure de la tubulure, à fixer le tampon sur un mandrin (4) par sertissage des parois divergentes autour d'une partie formant tête (41) du mandrin (4), à insérer le mandrin (4) assemblé avec le tampon (2) à l'intérieur de l'organe tubulaire et à dilater le tampon jusqu'à un contact ferme avec l'organe tubulaire en un endroit voulu, prédéterminé par la position ou la longueur d'une matrice support (5) fixée au mandrin, à retirer le mandrin du tampon (2), caractérisé en ce que lors de l'expansion du tampon la paroi de l'organe tubulaire est déformée de manière plastique, formant ainsi une indentation (3) circonférentielle dans la paroi.

2. Procédé selon la revendication 1, caractérisé en ce que l'organe tubulaire est un tube d'aluminium et en ce qu'avant l'étape d'expansion, un anneau support extérieur (6) est positionné sur le tube au-dessus du tampon inséré.

3. Dispositif de fermeture d'un organe tubulaire (1) comprenant un organe expansé (2) ayant une section transversale de forme à peu près complémentaire à la section transversale interne de l'organe tubulaire et s'étendant circonférentiellement dans la paroi de l'organe tubulaire, caractérisé en ce que l'organe expansé (2) est placé dans une indentation (3) de la paroi de l'organe tubulaire causée par une déformation plastique de la paroi.

4. Dispositif de fermeture selon la revendication 3, caractérisé en ce que l'organe expansé (2) est un tampon en forme de coupelle ayant des parois extérieures (2) divergentes dans la direction de l'écoulement dominant et/ou de la pression dans l'organe tubulaire.

5. Dispositif de fermeture selon la revendication 4, caractérisé en ce que l'organe tubulaire (1) est un tube d'aluminium pourvu d'un anneau support extérieur (6) entourant l'indentation (3) du tube.

FIG. 1

FIG. 2

FIG. 2 a

FIG. 3

FIG. 4

FIG. 4a

FIG. 5

FIG. 5a